# EUROPÄISCHE PATENTANMELDUNG

(11) **EP 2 093 340 A1**
(43) Veröffentlichungstag der Anmeldung: **26.08.2009**
(21) Anmeldenummer: 09002540.4
(22) Anmeldetag: 23.02.2009
(51) Int. Cl.: E04B 1/80

(54) **Verbundwärmedämmplatte und Wärmedämmverbundsystem**

(30) Priorität: 22.02.2008 DE 202008002492 U
(71) Anmelder: Variotec Sandwichelemente GmbH & Co. KG, 92318 Neumarkt (Oberpfalz) (DE)
(72) Erfinder: Bauer-Ebenhöch, Erich, 92318 Neumarkt (DE)
(74) Vertreter: Zinnecker, Armin

(57) **Zusammenfassung**

Eine Verbundwärmedämmplatte 1, 1' umfaßt eine oder mehrere Vakuumisolationsplatten (2), die von einer Grundplatte (5), einer Deckplatte (6) und umlaufenden Randstreifen (7) umgeben sind. Um eine derartige Verbundwärmedämmplatte zu verbessern sind an dem oder den Rändern der Deckplatte (6) stufenförmige Randausnehmungen (8) vorgesehen (Fig. 2).

## Beschreibung

Die Erfindung betrifft eine Verbundwärmedämmplatte und ein Wärmedämmverbundsystem (WDVS), das aus mehreren Verbundwärmedämmplatten besteht.

Aus der EP 1 544 367 A2 ist eine Verbundwärmedämmplatte bekannt, die eine oder mehrere Vakuumisolationsplatten umfaßt, die von einer Grundplatte, einer Deckplatte und umlaufenden Randstreifen umgeben sind. Die vorbekannten Verbundwärmedämmplatten werden zur Wärmedämmung von Bauwerken eingesetzt.

Aufgabe der Erfindung ist es, eine verbesserte Verbundwärmedämmplatte vorzuschlagen.

Erfindungsgemäß wird diese Aufgabe durch die Merkmale des Anspruchs 1 gelöst. Die Verbundwärmedämmplatte umfaßt eine oder mehrere Vakuumisolationsplatten, die von einer Grundplatte, einer Deckplatte und umlaufenden Randstreifen umgeben sind. Die Vakuumisolationsplatten bestehen aus einer oder mehreren Vakuumdämmplatten und einer vakuumdichten Umhüllung. Die Vakuumdämmplatten sind aus einem evakuierbaren, porösen Material geringer Wärmeleitfähigkeit hergestellt. Bei der vakuumdichten Umhüllung handelt es sich insbesondere um eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff.

Die Vakuumisolationsplatten sind vorzugsweise rechteckig. Sie sind an ihrer Unterseite mit einer Grundplatte versehen, die die Grundfläche der Vakuumisolationsplatten vollständig überdeckt und vorzugsweise allseits überragt. In entsprechender Weise ist die Oberseite der Vakuumisolationsplatten mit einer Deckplatte versehen, die die Grundfläche der Vakuumisolationsplatten vollständig überdeckt und vorzugsweise allseits überragt. Vorzugsweise ist die Deckplatte mit der Grundplatte kongruent.

Die Vakuumisolationsplatten sind ferner von umlaufenden Randstreifen umgeben. Die Randstreifen umrahmen die Vakuumisolationsplatten. Sie liegen vorzugsweise zwischen der Grundplatte und der Deckplatte. Vorteilhaft ist es, wenn die Außenkontur der Randstreifen mit der Außenkontur der Grundplatte und/oder der Deckplatte kongruent ist. Durch den Randstreifen kann auch eine Kürzungsmöglichkeit geschaffen werden. Der Randstreifen kann abgeschnitten werden, wenn dies zur Anpassung an die bauliche Situation erforderlich ist.

An dem oder den Rändern der Deckplatte sind stufenförmige Randausnehmungen vorgesehen. Die Randausnehmungen können an einem, mehreren oder allen Rändern der Deckplatte vorhanden sein. Vorteilhaft ist es, wenn die Randausnehmungen an allen Rändern der Deckplatte vorgesehen sind. Sie bilden dann einen umlaufenden Rand. In die stufenförmigen Randausnehmungen aneinandergrenzender Verbundwärmedämmplatten und damit aneinandergrenzender Deckplatten können Abdeckstreifen eingelegt werden. Von den aneinandergrenzenden Bereichen benachbarter Verbundwärmedämmplatten werden im allgemeinen Wärmebrücken gebildet. Diese Wärmebrücken werden durch den Abdeckstreifen, der aneinandergrenzende Randausnehmungen überdeckt, geschlossen. Der Abdeckstreifen besteht vorzugsweise aus einem wärmeisolierenden Material. Er kann eine Verbundwärmedämmplatte aufweisen oder aus einer Verbundwärmedämmplatte bestehen.

Vorteilhafte Weiterbildungen sind in den Unteransprüchen beschrieben.

Die Verbundwärmedämmplatte kann einen oder mehrere innere Begrenzungsstreifen aufweisen. Für den oder die inneren Begrenzungsstreifen sind insbesondere diejenigen Materialien geeignet, die auch für die umlaufenden Randstreifen der Verbundwärmedämmplatte geeignet sind. Vorzugsweise bestehen der oder die inneren Begrenzungsstreifen aus demselben Material wie die umlaufenden Randstreifen.

Vorteilhaft ist es, wenn die stufenförmigen Randausnehmungen einen rechteckigen Querschnitt aufweisen. In diesem Fall können aneinandergrenzende Randausnehmungen aneinandergrenzender Deckplatten von einem Abdeckstreifen mit rechteckigem Querschnitt geschlossen werden.

Vorteilhaft ist es, wenn die Grundplatte und/oder die Deckplatte aus einem Dämmstoff, vorzugsweise aus einem Schaumkunststoff, hergestellt sind. Vorzugsweise sind die Grundplatte und/oder die Deckplatte aus Polystyrol und/oder EPS und/oder PUR und/oder aus einem anderen geeigneten Schaumkunststoff hergestellt. Polystyrol ist als Putzgrund geeignet und zugelassen, weshalb die mauerseitige Grundplatte und/oder die außenseitige Deckplatte bevorzugt aus Polystyrol hergestellt sind. Besonders geeignet sind allerdings auch alle anderen Schaumkunststoffe, die als Putzgrund geeignet sind.

Vorzugsweise sind die Randstreifen und/oder der oder die inneren Begrenzungsstreifen aus einem Dämmstoff, vorzugsweise aus einem Schaumkunststoff, hergestellt. Besonders geeignet ist PUR, also Polyurethan-Schaum, oder PS, also Polystyrol, oder EPS. Es können allerdings auch andere, insbesondere formstabile Kunststoffe verwendet werden. Benachbarte Verbundwärmedämmplatten können in ihrem Randbereich durch einen gemeinsamen Dübel oder ein sonstiges Befestigungselement mit dem Untergrund, insbesondere einem Mauerwerk, verbunden werden. Die Dübel durchdringen in diesem Fall die aneinandergrenzenden Randstreifen. Die Stärke der Randstreifen ist derart gewählt, daß unter Berücksichtigung der erforderlichen Toleranzen eine Beschädigung der innenliegenden Vakuumisolationsplatten ausgeschlossen ist.

Nach einer weiteren vorteilhaften Weiterbildung sind in der Verbundwärmedämmplatte eines oder mehrere Dübellöcher vorgesehen. In diesem Fall befinden sich in der Verbundwärmedämmplatte mehrere Vakuumisolationsplatten. Zwei aneinandergrenzende Vakuumisolationsplatten weisen benachbarte Ausnehmungen auf, die zwischen sich ein Dübelloch bilden. Es ist allerdings auch möglich, daß von den beiden aneinandergrenzenden Vakuumisolationsplatten nur eine eine Ausnehmung aufweist, die ein Dübelloch bildet.

Eine weitere vorteilhafte Weiterbildung ist **dadurch gekennzeichnet, daß** in einem oder mehreren oder allen Randstreifen und/oder in einem oder mehreren oder allen inneren Begrenzungsstreifen eines oder mehrere Dübellöcher vorgesehen sind. Hierfür sind die Randstreifen bzw. inneren Begrenzungsstreifen vorzugsweise mit einer solchen Breite bemessen, daß auch unter Berücksichtigung der erforderlichen Toleranzen eine sichere Befestigung gewährleistet ist. Die Dübellöcher können bei der Herstellung der Verbundwärmedämmplatte eingearbeitet werden. Stattdessen oder zusätzlich ist es allerdings auch möglich, die Dübellöcher nach der Herstellung der Verbundwärmedämmplatte herzustellen, insbesondere bei der Montage der Verbundwärmedämmplatte, also auf der Baustelle. Ein besonderer Vorteil liegt darin, daß die Dübellöcher an jeder beliebigen Stelle des Randstreifens und/oder inneren Begrenzungsstreifens angebracht werden können sowie in der erforderlichen Anzahl und dem erforderlichen Abstand. Wenn die Dübellöcher erst nachträglich hergestellt werden ist man bei der Montage nicht an vorgegebene Positionen für die Dübellöcher gebunden.

Vorteilhaft ist es, wenn die Deckplatte im Bereich des oder der Dübellöcher jeweils eine Lochausnehmung aufweist. Vorzugsweise ist die Lochausnehmung kreisförmig bzw. zylinderförmig gestaltet. Sie hat vorzugsweise die Form einer Einsenkung. Die Lochausnehmung umgibt das Dübelloch vorzugsweise konzentrisch. Sie dient dazu, den Dübelkopf aufzunehmen.

Vorzugsweise ist die Lochausnehmung durch eine Lochabdeckung abgedeckt. Durch das Dübelloch wird eine Wärmebrücke gebildet. Die Lochabdeckung dient dazu, diese Wärmebrücke zu schließen. Für die Lochabdeckung sind insbesondere diejenigen Materialien geeignet, die auch für die Deckplatte geeignet sind. Vorzugsweise ist die Lochabdeckung aus demselben Material hergestellt wie die Deckplatte.

Die Erfindung betrifft ferner ein Wärmedämmverbundsystem, das durch aneinandergrenzende erfindungsgemäße Verbundwärmedämmplatten und Abdeckstreifen zum Abdecken der aneinandergrenzenden Randausnehmungen aneinandergrenzender Deckplatten gekennzeichnet ist.

Die Erfindung betrifft schließlich einen Abdeckstreifen zum Abdecken aneinandergrenzender Randausnehmungen aneinandergrenzender Verbundwärmedämmplatten gemäß der Erfindung.

Die Abdeckstreifen können eine Vakuumisolationsplatte aufweisen oder aus einer Vakuumisolationsplatte bestehen. Für die Materialien und den Aufbau der Vakuumisolationsplatte des Abdeckstreifens wird auf die obigen Ausführungen zu den Vakuumisolationsplatten der Verbundwärmedämmplatte verwiesen.

Ausführungsbeispiele der Erfindung werden nachstehend anhand der beigefügten Zeichnung im einzelnen erläutert. In der Zeichnung zeigt
- Fig. 1: mehrere Verbundwärmedämmplatten in einer Ansicht von vorne,
- Fig. 2: einen Schnitt längs der Linie 1-1 in Fig. 1,
- Fig. 3: einen Schnitt längs der Linie 2-2 in Fig. 1,
- Fig. 4: eine Abwandlung der Fig. 1 mit schematisch eingezeichneten Vakuumisolationsplatten
- Fig. 5: eine Abwandlung der Fig. 4,
- Fig. 6: eine abgewandelte Ausführungsform einer Verbundwärmedämmplatte mit einem inneren Begrenzungsstreifen in einer Ansicht von vorne,
- Fig. 7: eine Abwandlung der Verbundwärmedämmplatte nach Fig. 6,
- Fig. 8: einen Schnitt durch die Verbundwärmedämmplatten nach Fig. 6 und
- Fig. 9: eine Abwandlung der Fig. 6 mit schematisch eingezeichneten Abdeckstreifen.

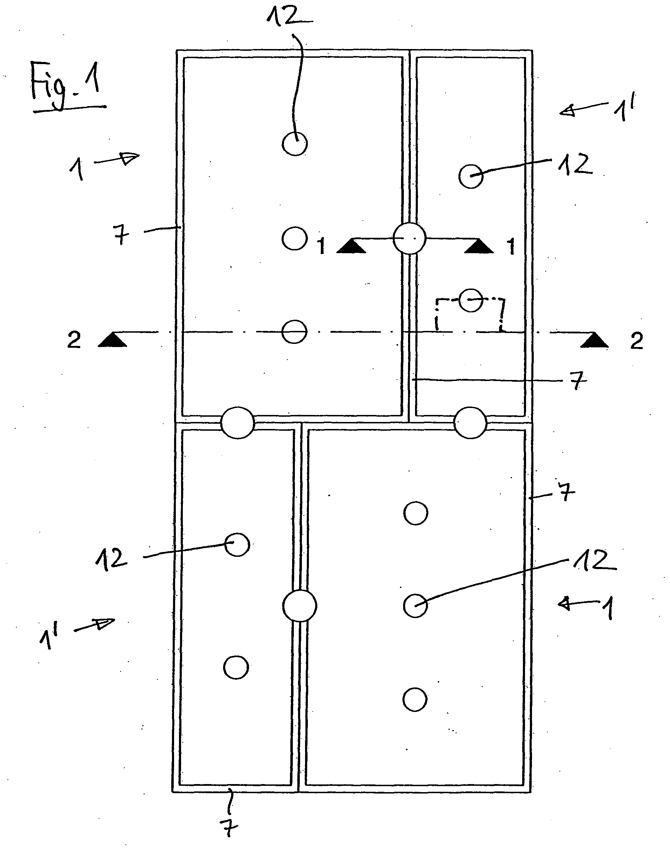

Fig. 1 zeigt vier Verbundwärmedämmplatten 1, 1' in einer Ansicht von vorne. Die Verbundwärmedämmplatten 1 haben eine Länge von 1050 mm und eine Breite von 640 mm. Die Verbundwärmedämmplatten 1' haben dieselbe Länge von 1050 mm und die halbe Breite von 340 mm. Die Höhe aller Verbundwärmedämmplatten 1, 1' beträgt 50 mm bis 90 mm, vorzugsweise 70 mm.

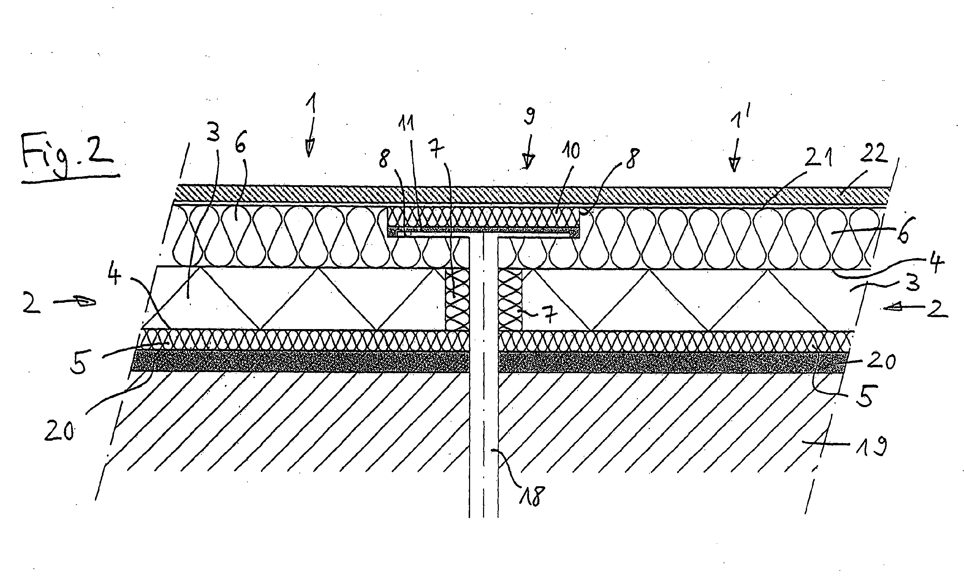

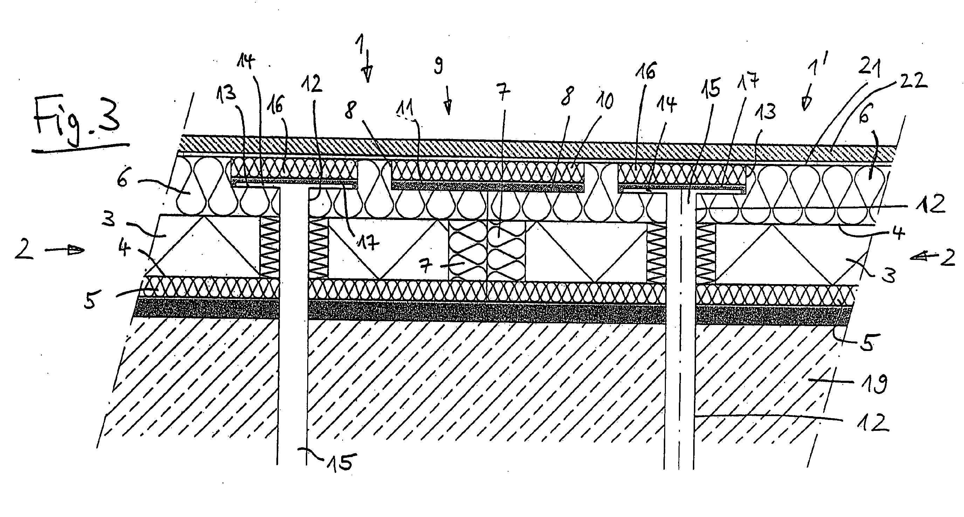

Wie aus Fig. 2 und 3 ersichtlich umfassen die Verbundwärmedämmplatten 1, 1' Vakuumisolationsplatten 2, die jeweils aus einer Vakuumdämmplatte 3 und einer vakuumdichten Umhüllung 4 bestehen. Die Vakuumisolationsplatten sind von jeweils einer Grundplatte 5 und einer Deckplatte 6 umgeben. Die Vakummisolationsplatte hat eine Stärke von 10 mm bis 50 mm, vorzugsweise 30 mm. Die Stärke der Grundplatte 5 beträgt 10 mm. Die Deckplatte 6 ist 30 mm stark. Die Grundplatte 5 und die Deckplatte 6 bestehen aus Polystyrol PS.

Die Vakuumisolationsplatten 2 weisen ferner einen umlaufenden Randstreifen 7 auf, der aus PUR (Polyurethan) oder PS (Polystyrol), hergestellt ist. Der umlaufende Randstreifen 7 umgibt die Vakuumisolationsplatten 2 vollständig. Er liegt zwischen der Grundplatte 5 und der Deckplatte 6. Die Außenkontur des umlaufenden Randstreifens 7 fluchtet mit den Außenkonturen der Grundplatte 5 und der Deckplatte 6.

An den Rändern der Deckplatte 6 sind stufenförmige Randausnehmungen 8 vorgesehen. Es handelt sich um umlaufende Randausnehmungen. Die Deckplatten 6 weisen also auf beiden Längsseiten und beiden Schmalseiten die stufenförmigen Randausnehmungen 8 auf.

Die stufenförmigen Randausnehmungen 8 haben einen rechteckigen Querschnitt. In die benachbarten Randausnehmungen 8 der Deckplatten 6 benachbarter Verbundwärmedämmplatten 1, 1' können Abdeckstreifen 9 eingelegt werden. Die Abdeckstreifen 9 haben dieselbe Höhe wie die stufenförmigen Randausnehmungen 8 und die dopelte Breite der stufenförmigen Randausnehmungen 8. Sie sind aus einem Kunststoffschaum 10, nämlich aus Polystyrol, hergestellt. Die Abdeckstreifen 9 sind durch ein Klebebett 11 mit der Deckplatte 6 verklebt. Das Klebebett 11 befindet sich zwischen der Deckplatte 6 und der Unterseite des Abdeckstreifens 9. Es besteht insbesondere aus einem Putzkleber.

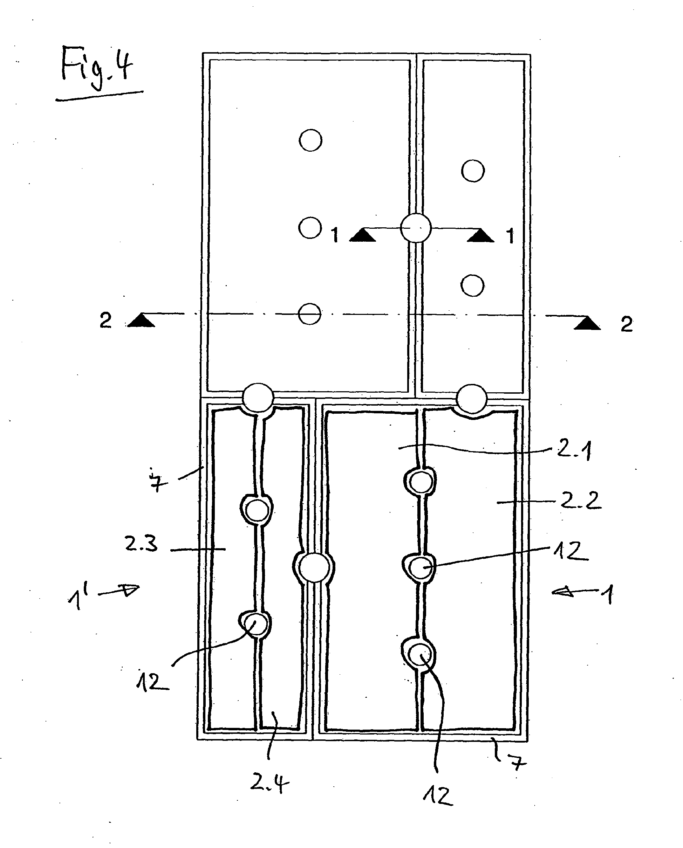

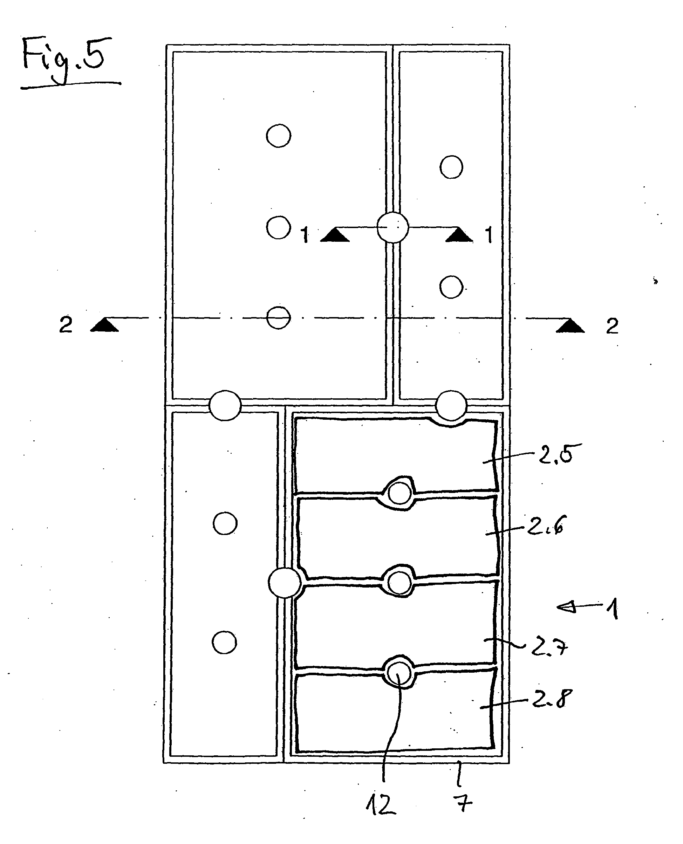

In der Darstellung der Fig. 1 ist die Deckplatte 6 weggelassen, so daß die umlaufenden Randstreifen 7 sichtbar sind. Die an sich sichtbaren Vakuumisolationsplatten 2 sind in Fig. 1 aus zeichnerischen Gründen weggelassen. Sie sind in Fig. 4 und 5 dargestellt. In der Ausführungsform nach Fig. 4 umfassen die Verbundwärmedämmplatten 1, 1', wie aus der unteren Hälfte der Fig. 4 ersichtlich, jeweils zwei Vakuumisolationsplatten 2.1, 2.2 bzw. 2.3, 2.4. Aneinandergrenzende Vakuumisolationsplatten 2.1 und 2.2 sowie 2.3 und 2.4 weisen jeweils im wesentlichen halbkreisförmige Ausnehmungen auf, die zwischen sich jeweils ein Dübelloch 12 oder ein Loch für ein anderes Befestigungselement bilden.

In Fig. 5 ist eine Abwandlung dargestellt, bei der die rechts unten dargestellte Verbundwärmedämmplatte 1 vier Vakuumisolationsplatten 2.5, 2.6, 2.7, 2.8 umfaßt.

Wie aus Fig. 3 ersichtlich weisen die Deckplatten 6 der benachbarten Verbundwärmedämmplatten 1, 1' im Bereich der Dübellöcher 12 jeweils eine Lochausnehmung 13 auf. Die Lochausnehmungen 13 haben die Form einer Einsenkung, nämlich einer zylinderförmigen Einsenkung. Die Tiefe der Lochausnehmungen 13 und der stufenförmigen Randausnehmungen 8 beträgt jeweils etwa 15 mm. Der Kopf 14 des Dübels 15 liegt auf dem Grund der Lochausnehmung 13. Er ist durch eine Lochabdeckung 16 abgedeckt, die zylinderförmig ist und die bündig mit der Oberseite der Deckplatte 6 abschließt. Die Lochabdeckung 16 kann aus PS oder einen sonstigen Kunststoff hergestellt sein. Der Außendurchmesser der Lochabdeckung 16 ist im wesentlichen genauso groß wie der Durchmesser der Lochausnehmung 13. An der Unterseite der Lochabdeckung 16 kann eine Klebeschicht 17 vorgesehen sein, die insbesondere von einem Putzkleber gebildet sein kann. Die Klebeschicht 17 umgibt den Kopf 14 des Dübels 15 ringförmig. Anstelle von Dübeln können auch andere Befestigungsmittel verwendet werden.

Wie aus Fig. 2 ersichtlich werden die benachbarten Verbundwärmedämmplatten 1, 1' in ihrem Randbereich durch einen gemeinsamen Dübel 18 an dem Mauerwerk 19 befestigt. Der Dübel 18 durchdringt die aneinandergrenzenden Randstreifen 7 der benachbarten Verbundwärmedämmplatten 1, 1'. Die Stärke der Randstreifen 7 ist derart gewählt, daß unter Berücksichtigung der erforderlichen Toleranzen eine Beschädigung der innenliegenden Vakuumisolationsplatten 2 ausgeschlossen ist.

Die Verbundwärmedämmplatten 1, 1' können an dem Mauerwerk 19 befestigt werden. Auf das Mauerwerk 19 wird zunächst ein Klebebett 20 mit einer Stärke von etwa 10 bis 20 mm aufgebracht. Auf das Klebebett 20 werden die Vakuumisolationsplatten 1, 1' mit ihren Grundplatten 5 aufgebracht. Die Verbundwärmedämmplatten 1, 1' können durch die Dübel 15, 18 am Mauerwerk 19 befestigt werden. Anschließend werden die Abdeckstreifen 9 und Lochabdeckungen 16 eingelegt. Schließlich werden die Deckplatten 6 einschließlich der Abdeckstreifen 9 und der Lochabdeckungen 16 von einem Putzgewebe 21 überdeckt und mit einer Putzschicht 22 mit einer Stärke von etwa 10 mm verputzt.

Die Randstreifen 7 können aus PUR oder einem sonstigen Dämmstoff hergestellt sein, insbesondere aus Polystyrol PS. Die Dübellöcher 12 und/oder die Löcher für die Dübel 18 können zusätzlich mit Polyurethan ausgeschäumt oder mit Nanogel gefüllt sein. Hierdurch kann die Bildung von Wärmebrücken noch besser verhindert werden. Es ist möglich, benachbarte Verbundwärmedämmplatten an den Stoßkanten zu verkleben, insbesondere mit PU zu verkleben. Es ist ferner möglich, benachbarte Verbundwärmedämmplatten dicht an dicht zu stoßen. Durch beide Maßnahmen kann die Bildung von Wärmebrücken noch besser verhindert werden, insbesondere wenn die Verbundwärmedämmplatten unsauber verlegt werden sollten und/oder wenn Bautoleranzen vorhanden sind. Es ist möglich, die Abdeckstreifen 9 und/oder die Lochabdeckungen 16 insbesondere mit PU zu verkleben. Es ist ferner möglich, die Abdeckstreifen 9 und/oder die Lochabdeckungen 16 mit den angrenzenden Teilen der Deckplatte 6 dicht an dicht zu stoßen. Auch hierdurch kann die Bildung von Wärmebrücken besser verhindert werden.

Die Verwendung von Polystyrol für die Grundplatte und/oder die Deckplatte, insbesondere die Deckplatte, ist auch deshalb besonders vorteilhaft, weil Polystyrol als Putzgrund geeignet und zugelassen ist. Aus diesem Grund sind auch die Abdeckstreifen und Lochabdeckungen vorzugsweise aus Polystyrol hergestellt.

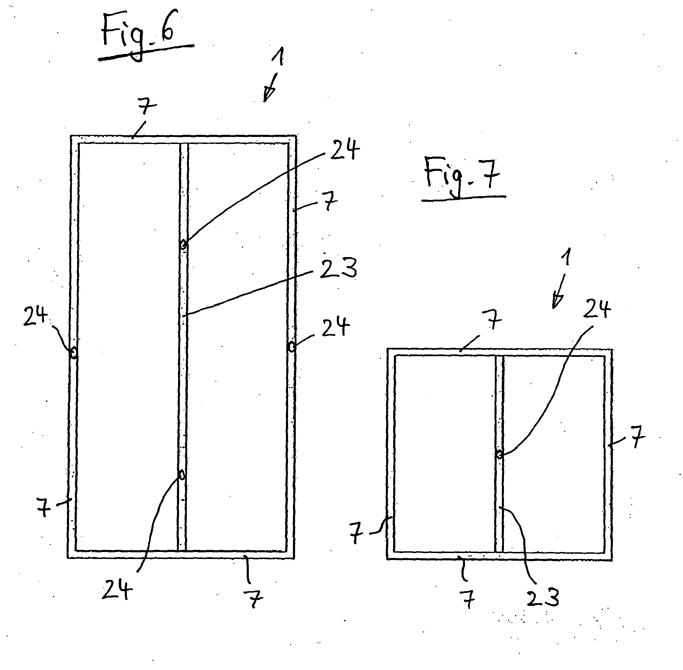

Fig. 6 bis 9 zeigen eine abgewandelte Ausführungsform, bei der die Verbundwärmedämmplatten innere Begrenzungsstreifen aufweisen. Bauteile, die mit denjenigen der Ausführungsformen nach Fig. 1 bis 5 übereinstimmen, sind mit denselben Bezugszeichen versehen und werden nicht erneut beschrieben.

Die Verbundwärmedämmplatte 1 nach Fig. 6 umfaßt umlaufende Randstreifen 7 und einen inneren Begrenzungsstreifen 23. Der innere Begrenzungsstreifen 23 verläuft parallel zu und in der Mitte von den längeren Randstreifen 7. Er ist also als Mittelstreifen oder Mittelsteg ausgestaltet. Die Randstreifen 7 und der innere Begrenzungsstreifen 23 sind aus demselben Material hergestellt. Sie weisen dieselben Abmessungen, insbesondere dieselbe Breite auf. In dem Randstreifen 7 und in dem inneren Begrenzungsstreifen 23 sind Dübellöcher 24 vorgesehen. Die Dübellöcher 24 können bei der Herstellung der Verbundwärmedämmplatte, also werksseitig, hergestellt sein. Es ist allerdings auch möglich einzelne oder alle Dübellöcher erst beim Anbringen der Verbundwärmedämmplatte 1 auf dem Untergrund, also auf der Baustelle, herzustellen.

Die Verbundwärmedämmplatte 1 nach Fig. 6 weist eine Länge von 1.200 mm und eine Breite von 600 mm auf.

Die in Fig. 7 dargestellte Verbundwärmedämmplatte 1 ist halb so groß. Sie ist quadratisch mit einer Seitenlänge von 600 mm.

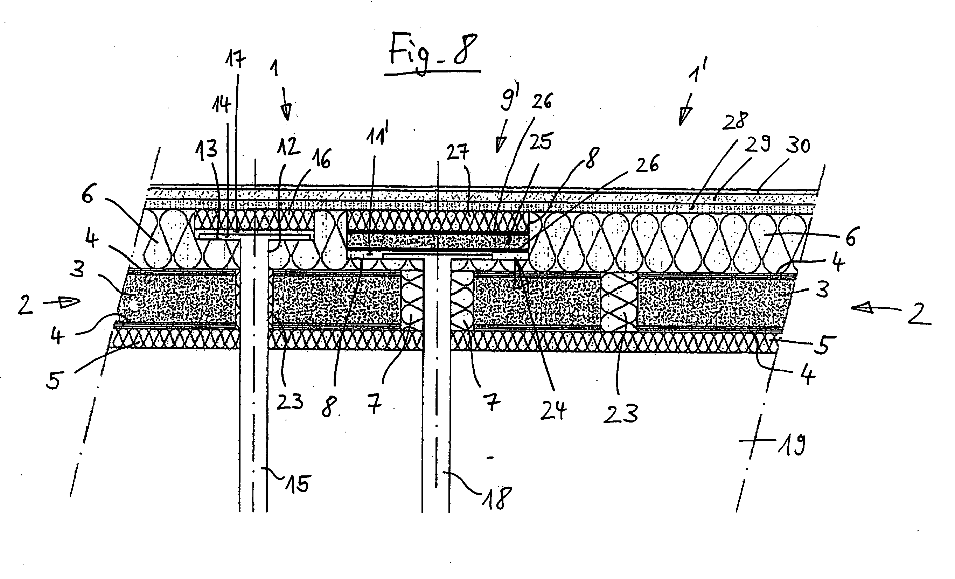

Aus der Schnittdarstellung gemäß Fig. 8 sind die inneren Begrenzungsstreifen 23 der benachbarten Verbundwärmedämmplatten 1, 1' ersichtlich. Der innere Begrenzungsstreifen 23 der Verbundwärmedämmplatte 1 wird von einem Dübel 15 durchdrungen.

Aus der Schnittdarstellung gemäß Fig. 8 ist ferner ersichtlich, daß der Abdeckstreifen 9' eine Vakuumisolationsplatte 24 umfaßt. Die Vakuumisolationsplatte 24 besteht aus einer Vakuumdämmplatte 25 und einer vakuumdichten Umhüllung 26. In Längsrichtung des Abdeckstreifens 9' sind mehrere Vakuumisolationsplatten 24 hintereinander angeordnet.

Der Abdeckstreifen 9' umfaßt ferner eine Schicht 27 aus einem Kunststoffschaum und eine Schicht 11' aus einem plattenförmigen Werkstoff, vorzugsweise aus einem Kunststoff. Die Schicht 11' ist möglichst dünn. Sie kann eine Stärke von 1 mm aufweisen. Die Schicht 11' kann insbesondere von einer HPL-Platte (high pleasure laminate) gebildet werden. Es sind aber auch andere, ähnlich dünne plattenförmige Werkstoffe, vorzugsweise Kunststoffe, geeignet. Die Schicht 11' umgibt den Kopf des Dübels 18 und schützt die untere vakuumdichte Umhüllung 26 vor diesem Dübelkopf. Wie aus Fig. 8 ersichtlich, befindet sich die Vakuumisolationsplatte 24 zwischen der HPL-Platte 11' und der Schicht 27.

Die Verbundwärmedämmplatten 1, 1' sind an einer Fassade befestigt. Die Schicht auf der Grundplatte 6 wird von Ausgleichs-, Klebe- und Armierungsmörtel 28 gebildet. Darauf befindet sich der Oberputz 29, der von der Fassadenfarbe 30 abgedeckt wird.

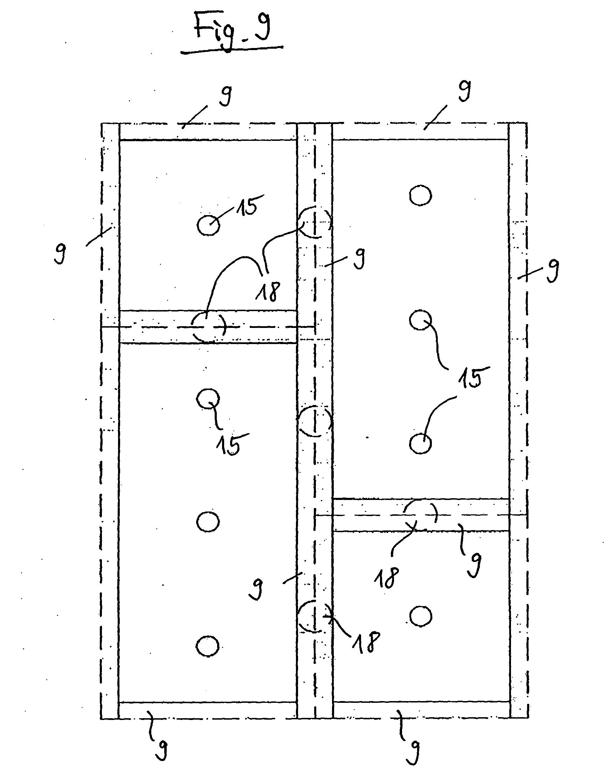

In Fig. 9 sind vier Verbundwärmedämmplatten dargestellt, nämlich zwei Verbundwärmedämmplatten nach Fig. 6 und zwei Verbundwärmedämmplatten nach Fig. 7. Die Dübel 15 durchgreifen die inneren Begrenzungsstreifen 23. Die Dübel 18 liegen zwischen benachbarten Verbundwärmedämmplatten.

Als Dämmstoffmaterialien für die umlaufenden Randstreifen, die inneren Begrenzungsstreifen, die Grundplatten und/oder die Deckplatten sind folgende Materialien besonders geeignet: PUR, PS, EPS, XPS, PIR, Resolschaum, Mineralwolle, Steinwolle, Matten aus Nanogel und alle vergleichbaren Dämmstoffe.

## Patentansprüche

1. Verbundwärmedämmplatte (1, 1') mit einer oder mehreren Vakuumisolationsplatten (2, 2.1, 2.2, 2.3, 2.4), die von einer Grundplatte (5), einer Deckplatte (6) und umlaufenden Randstreifen (7) umgeben sind,
**dadurch gekennzeichnet,**
**daß** an dem oder den Rändern der Deckplatte (6) stufenförmige Randausnehmungen (8) vorgesehen sind.

2. Verbundwärmedämmplatte nach Anspruch 1, **dadurch gekennzeichnet, daß** die Verbundwärmedämmplatte einen oder mehrere innere Begrenzungsstreifen (23) aufweist.

3. Verbundwärmedämmplatte nach einem der vorhergehenden Ansprüche, **dadurch gekennzeichnet, daß** die stufenförmigen Randausnehmungen (8) einen rechteckigen Querschnitt aufweisen.

4. Verbundwärmedämmplatte nach einem der vorhergehenden Ansprüche, **dadurch gekennzeichnet, daß** die Grundplatte (5) und/oder die Deckplatte (6) aus einem Dämmstoff, vorzugsweise aus einem Schaumkunststoff, hergestellt sind.

5. Verbundwärmedämmplatte nach einem der vorhergehenden Ansprüche, **dadurch gekennzeichnet, daß** die Randstreifen (7) und/oder der oder die inneren Begrenzungsstreifen (23) aus einem Dämmstoff, vorzugsweise aus einem Schaumkunststoff, hergestellt sind.

6. Verbundwärmedämmplatte nach einem der vorhergehenden Ansprüche, **dadurch gekennzeichnet, daß** in der Verbundwärmedämmplatte (1, 1') eines oder mehrere Dübellöcher (12) vorgesehen sind.

7. Verbundwärmedämmplatte nach einem der vorhergehenden Ansprüche, **dadurch gekennzeichnet, daß** in einem oder mehreren oder allen Randstreifen (7) und/oder inneren Begrenzungsstreifen (23) eines oder mehrere Dübellöcher (24) vorgesehen sind.

8. Verbundwärmedämmplatte nach Anspruch 6 oder 7, **dadurch gekennzeichnet, daß** die Deckplatte (6) im Bereich des oder der Dübellöcher (12) jeweils eine Lochausnehmung (13) aufweist.

9. Verbundwärmedämmplatte nach Anspruch 8, **dadurch gekennzeichnet, daß** die Lochausnehmung (13) durch eine Lochabdeckung (16) abgedeckt ist.

10. Verbundwärmedämmsystem, **gekennzeichnet durch** aneinandergrenzende Verbundwärmedämmplatten (1, 1') nach einem der Ansprüche 1 bis 11 und Abdeckstreifen (9) zum Abdecken der aneinandergrenzenden Randausnehmungen (8) aneinandergrenzender Deckplatten (6).

11. Abdeckstreifen (9, 9') zum Abdecken aneinandergrenzender Randausnehmungen (8) aneinandergrenzender Verbundwärmedämmplatten nach einem der Ansprüche 1 bis 11.

12. Abdeckstreifen nach Anspruch 11, **dadurch gekennzeichnet, daß** der Abdeckstreifen (9') eine Vakuumisolationsplatte (24) aufweist.
